# EUROPÄISCHE PATENTSCHRIFT

(11) **EP 3 822 529 B1**
(45) Veröffentlichungstag und Bekanntmachung des Hinweises auf die Patenterteilung: **15.02.2023**
(21) Anmeldenummer: 20207036.3
(22) Anmeldetag: 11.11.2020
(51) Int. Cl.: F16K 31/06, F16K 27/02, F02M 61/16, F02M 63/00

(54) **VERFAHREN ZUR BILDUNG EINER VENTILEINHEIT, VENTILEINHEIT**
VALVE UNIT AND METHOD FOR FORMING A VALVE UNIT
PROCÉDÉ DE CONSTRUCTION D'UNE UNITÉ DE SOUPAPE, UNITÉ DE SOUPAPE

(30) Priorität: 13.11.2019 DE 102019130674
(43) Veröffentlichungstag der Anmeldung: 19.05.2021
(73) Patentinhaber: SVM Schultz Verwaltungs-GmbH & Co. KG, 87700 Memmingen (DE)
(72) Erfinder: Hasel, Claus Peter, 87700 Memmingen (DE); Weiß, Bernhard, 87737 Boos (DE)
(74) Vertreter: Patentanwälte Olbricht, Buchhold, Keulertz Partnerschaft mbB

(56) Entgegenhaltungen:
- CH-A5- 683 863
- DE-A1- 10 029 296
- DE-A1- 10 312 985
- DE-A1-102013 220 547

## Beschreibung

Die Erfindung betrifft ein Verfahren zur Bildung einer Ventileinheit gemäß Anspruch 1.

Eine Ventileinheit umfasst üblicherweise zumindest eine Stößelführung, eine erste Ventilscheibe, die einen ersten Ventilsitz aufweist und mit einer ersten äußeren Stirnfläche der Stö-βelführung in Anlage ist, eine zweite Ventilscheibe, die einen zweiten Ventilsitz aufweist und mit einer der ersten Stirnfläche gegenüberliegenden zweiten äußeren Stirnfläche der Stößelführung in Anlage ist. Sie umfasst zudem einen Ventilstößel, der in der Stößelführung in einer Hubrichtung zwischen einer ersten Endposition und einer zweiten Endposition beweglich angeordnet ist und in der ersten Endposition den ersten Ventilsitz und in der zweiten Endposition den zweiten Ventilsitz abdichtet.

An Ventileinheiten und insbesondere an deren Bauteile werden hohe Maßtoleranzanforderungen gestellt, so dass sie sehr genau gefertigt werden müssen. Als Toleranz soll die Abweichung einer Abmessung vom Normzustand aufgefasst werden, die die Funktion gerade noch nicht gefährdet. Bei der Bildung einer Ventileinheit werden also bislang alle separaten Bauteile sehr exakt gefertigt, da die montierte Ventileinheit kaum Maßtoleranzen zulässt. Bisher bilden also nur exakt zueinander passende und vorbestimmte Bauteile eine Ventileinheit aus. Dieses Fertigungsregime ist jedoch aufgrund der Präzisionsanforderungen an die Bauteile kostenintensiv.

So ist aus der DE 103 12 985 A1 ein Ventilhub-Distanzstück und ein Ventil bekannt, wobei ein Ventilglied, das als Ventilstößel dient, um einen vorbestimmten Hubweg zwischen Kontakt mit einer oberen Sitzkomponente und einer unteren Sitzkomponente bewegbar ist.

Auch die DE 100 29 296 A1 offenbart ein Ventil, umfassend einen Stößel, welcher bei einer Betätigung eines Piezoaktors auf ein Ventilglied einwirkt, welches von einem Ventilsitz abhebt. De Stößel ist dabei von einem Ring mit Durchgangsbohrung geführt.

Der Erfindung liegt daher die Aufgabe zu Grunde, ein Verfahren zur Bildung einer Ventileinheit vorzuschlagen, welches großzügigere Maßtoleranzbereich für einzelne Bauteile zulässt und kostengünstiger ist.

Hauptmerkmale der Erfindung sind in Anspruch 1 angegeben. Ausgestaltungen sind Gegenstand der jeweils abhängigen Ansprüche. Das erste in Anspruch 1 vorgeschlagene Verfahren beruht auf einem "messenden und auswählenden"-Prinzip, das zweite offenbarte nicht erfindungsgemäße Verfahren beruht auf einem "Versuch und Irrtum"-Prinzip, um mit alternativen Ansätzen die oben bezeichnete Aufgabe zu lösen. Beide weisen den Vorteil auf, dass auf eine hochgenaue Fertigung der einzelnen Bauteile verzichtet werden kann.

Erfindungsgemäß wird ein Verfahren zur Bildung einer Ventileinheit vorgeschlagen, umfassend die Schritte:
- Bereitstellen einer ersten Ventilscheibe mit einem ersten Ventilsitz;
- Bereitstellen einer zweiten Ventilscheibe mit einem zweiten Ventilsitz;
- Bereitstellen eines Ventilstößels mit zwei gegenüberliegenden, jeweils zu dem ersten Ventilsitz und dem zweiten Ventilsitz korrespondierenden freien Enden;
- Bereitstellen einer Vielzahl von Stößelführungen mit bezogen auf eine Hubrichtung des Ventilstößels verschiedenen Abmessungen;
- Anordnen des Ventilstößels bezogen auf die Hubrichtung zwischen der ersten Ventilscheibe und der zweiten Ventilscheibe, so dass die beiden freien Enden jeweils den ersten Ventilsitz und den zweiten Ventilsitz abdichten;
- Messen eines auf die Hubrichtung bezogenen Scheibenabstands zwischen den auf diese Weise angeordneten ersten und zweiten Ventilscheiben;
- Auswählen einer Stößelführung aus der Vielzahl von Stößelführungen, so dass eine auf die Hubrichtung bezogene Abmessung der ausgewählten Stößelführung gleich einer Summe aus dem gemessenen Scheibenabstand und einem vorbestimmten Hub des Ventilstößels ist.

Gemäß dem vorgeschlagenen Verfahren wird die Ventileinheit zunächst teilmontiert (beide Ventilscheiben und Ventilstößel) und dann der Scheibenabstand vermessen. Die beiden Scheiben können während der Messung parallel zueinander ausgerichtet sein, um eine möglichst verlässliche Messung durchzuführen. Das gemessene Scheibenabstandsmaß dient als Auswahlgrundlage für die Stößelführung. Die betreffende Stößelführung kann also erst dann gewählt werden, wenn das Scheibenabstandsmaß ermittelt ist. Die Summe aus Scheibenabstandsmaß und vorbestimmter Hublänge ergeben das Auswahlkriterium für die zu wählende Stößelführung. Nach Auswahl der geeigneten Stößelführung kann diese ebenfalls im Verbund der beiden Ventilscheiben mit dem Ventilstößel angeordnet werden, so dass die Ventileinheit endmontiert ist.

Eine Stößelführung kann dann als geeignet angesehen werden, wenn deren Länge in Längsrichtung der Ventileinheit bzw. deren auf die Hubrichtung bezogene Abmessung der Summe aus Scheibenabstandsmaß und vorbestimmter Hublänge entspricht.

Die Vielzahl von Stößelführungen umfasst Stößelführungen mit unterschiedlichen Längen in Längsrichtung der Ventileinheit. Diese Längenunterschiede können bewusst konstruktiv herbeigeführt werden oder aber aufgrund von zulässigen Fertigungstoleranzen erzeugt werden.

Der Erfindung liegt nämlich die Idee zugrunde, dass diese Vorgehensweise zur Bildung einer Ventileinheit ermöglicht, dass aus einer Vielzahl von Stößelführungen diejenige gewählt werden kann, welche im konstruktiven Zusammenspiel mit dem Ventilstößel und/oder den Ventilscheiben eine Ventileinheit bildbar macht, welche höchste Präzisions- und feinste Toleranzanforderungen sowie eine perfekte Funktionalität erfüllt. Die Stößelführung kann nämlich mit der von dem Ventilstößel und/oder den Ventilscheiben hervorgerufene Abweichung von einer zuvor bestimmbaren SOLL-Abmessung korrespondieren. Bisher müssen alle Bauteile diese SOLL-Abmessungen aufweisen. Mit den erfindungsgemäßen Verfahren können Ventilstößel und/oder Ventilscheiben gewählt werden, deren Abmessungen eine größere Maßtoleranz, bezogen auf bisher bekannte Fertigungen, aufweisen können.

Beispielsweise kann der Teilmontageeinheit (beide Ventilscheiben und Ventilstößel) eine SOLL-Abmessung, vorzugsweise die Gesamtlängen in Längsrichtung der Ventileinheit, zugeordnet sein. Diese SOLL-Abmessung dient der perfekten Funktionalität des Hubs des Ventilstößels über die gesamte gewünschte Hublänge. Würde nun der Teilmontageeinheit eine Stößelführung zugeordnet, welche ein Übermaß aufweist, wäre eine ungewünscht zu lange Hublänge gewährleistet und könnte einer Stellcharakteristik eines elektromagnetischen Aktuators, wie beispielsweise eines Linearmagneten, nicht entsprechen. Stellcharakteristik soll bedeuten, dass der Hub eines Ankers eines Aktuators mit der entsprechenden Regelkennlinie korrespondieren soll. Würde jedoch der Teilmontageeinheit eine Stößelführung zugeordnet, welche ein Untermaß aufweist, wäre eine ungewünscht zu kurze Hublänge gewährleistet, was ebenfalls einer Stellcharakteristik eines Aktuators nicht entsprechen könnte. Das Übermaß und das Untermaß beziehen sich auf die Summe aus Scheibenabstandsmaß und vorbestimmter Hublänge.

Somit kann jeder Teilmontageeinheit aus tendenziell ungenau gefertigten Bauteilen eine korrespondierende Stößelführung aus tendenziell ungenauer Fertigung zugeordnet werden, so dass eine hochpräzise Ventileinheit in kostengünstiger Weise gefertigt werden kann.

Gemäß einer bevorzugten Ausgestaltung des Verfahrens werden ein Rückstellelement und der Ventilstößel in der Stößelführung angeordnet, so dass das Rückstellelement zwischen einem Führungsvorsprung des Ventilstößels und einem Führungsvorsprung der Stößelführung angeordnet ist und sich an den beiden Führungsvorsprüngen abstützt. Bereits bei der Teilmontage kann ein Rückstellelement, welches als Druckfeder ausgebildet sein kann, montiert werden. Dies ermöglicht den Verzicht auf einen späteren Einbau, beispielsweise nach Messung des Scheibenabstands oder nach Einbau der Stößelführung, was zu einer Vereinfachung des Herstellungsverfahrens und zu einer Kostenreduktion führt.

Es ist gemäß einer weiteren Ausgestaltung des Verfahrens nach der Erfindung denkbar, dass die erste Ventilscheibe und die zweite Ventilscheibe, bezogen auf die Hubrichtung an gegenüberliegenden äußeren Stirnflächen der Stößelführung angeordnet werden, so dass die erste Ventilscheibe und die zweite Ventilscheibe jeweils mit einer äußeren Stirnfläche in Anlage sind. Dadurch kann eine Konstruktion realisiert werden, welche bestmöglich der Messung des Scheibenabstands Rechnung trägt.

Offenbart wird zudem ein nicht erfindungsgemäßes Verfahren zur Bildung einer Ventileinheit, umfassend die Schritte
- Bereitstellen einer ersten Ventilscheibe mit einem ersten Ventilsitz;
- Bereitstellen einer zweiten Ventilscheibe mit einem zweiten Ventilsitz;
- Bereitstellen eines Ventilstößels mit zwei gegenüberliegenden, jeweils zu dem ersten Ventilsitz und dem zweiten Ventilsitz korrespondierenden freien Enden;
- Bereitstellen einer Stößelführung mit bezogen auf eine Hubrichtung des Ventilstößels definierten Abmessungen;
- Anordnen der Stößelführung und des Ventilstößels jeweils bezogen auf die Hubrichtung zwischen der ersten Ventilscheibe und der zweiten Ventilscheibe, so dass die erste Ventilscheibe und die zweite Ventilscheibe, bezogen auf die Hubrichtung an gegenüberliegenden äußeren Stirnflächen der Stößelführung angeordnet werden, so dass die erste Ventilscheibe und die zweite Ventilscheibe jeweils mit einer äußeren Stirnfläche in Anlage sind;
- Abdichten des ersten Ventilsitzes durch das freie Ende der beiden freien Enden mittels eines den Ventilstößel kraftbeaufschlagenden Anordnungsmittels;
- Messen eines auf die Hubrichtung bezogenen Hubwegs des Ventilstößels zwischen einer den ersten Ventilsitz abdichtenden Stellung und einer den zweiten Ventilsitz abdichtenden Stellung;
- Feststellen, ob der ermittelte Hubweg einem Definitionshubweg und/oder einem vordefinierten hydraulischen Volumenstrom entspricht;
- Für den Fall, dass eine Entsprechung vorliegt: Beibehalten der vorliegenden Anordnung aus den Ventilscheiben, der Stößelführung und dem Ventilstößel;
- Für den Fall, dass keine Entsprechung vorliegt: Ersetzen der Stößelführung durch eine andere Stößelführung und/oder Ersetzen des Ventilstößels durch einen anderen Ventilstößel und Durchführen zumindest der Schritte g (Messen eines auf die Hubrichtung bezogenen Hubwegs des Ventilstößels zwischen einer den ersten Ventilsitz abdichtenden Stellung und einer den zweiten Ventilsitz abdichtenden Stellung) und h (Feststellen, ob der ermittelte Hubweg einem Definitionshubweg und/oder einem vordefinierten hydraulischen Volumenstrom entspricht).

Vor Schritt g kann jedoch auch Schritt f (Abdichten des ersten Ventilsitzes durch das freie Ende der beiden freien Enden mittels eines den Ventilstößel kraftbeaufschlagenden Anordnungsmittels) durchgeführt werden.

Als Definitionshubweg ist ein Hubweg des Ventilstößels zu verstehen, welcher zuvor definiert wurde und mit der Stellcharakteristik eines Aktuators korrespondieren kann.

Der hydraulische Volumenstrom kann von einem elektromagnetischen Aktuator hervorgerufen werden bzw. ein hydraulischer Volumenstrom eines elektromagnetischen Aktuators sein. Der Volumenstrom kann beispielweise durch einen oder mehrere Ventilsitze der einen oder mehreren Ventilscheiben reichen.

Gemäß dem alternativ offenbarten nicht erfindungsgemäßen Verfahren werden zunächst einzelne Bauteile der Ventileinheit montiert (beide Ventilscheiben, Ventilstößel und Stößelführung) und dann die Hubweglänge vermessen. Das Messen kann beispielsweise per Messuhr erfolgen. Entspricht die gemessene Hubweglänge der Länge des Definitionshubwegs, passen die vorgenannten Bauteile zusammen, da sie das Kriterium des Definitionshubwegs erfüllen. Es ist daher aus tendenziell ungenau gefertigten Bauteilen eine hochpräzise Ventileinheit gefertigt worden. Ist die gemessene Hubweglänge kürzer oder Länger als die Länge des Definitionshubwegs, passen die vorgenannten Bauteile nicht zusammen, da sie das Kriterium des Definitionshubwegs nicht erfüllen. Sodann wird die Stößelführung durch eine andere Stößelführung ersetzt oder der Ventilstößel durch einen anderen Ventilstößel ersetzt oder beides. Im Anschluss daran erfolgt erneut eine Messung der Hubweglänge und der bereits erläuterte Vergleich mit der Länge des Definitionshubwegs. Diese Verfahrensschritte können schleifenartig so lange erfolgen bis das Kriterium des Definitionshubwegs erfüllt ist oder eine maximale Schleifenanzahl erreicht ist. Letzteres Kriterium dient dazu, einzelne sehr ungenaue Bauteile, welche in keiner vertretbaren Kombination mit anderen Bauteilen zu einer hochpräzisen Ventileinheit führen, auszusortieren.

Somit kann aus tendenziell ungenau gefertigten Bauteilen eine hochpräzise Ventileinheit in kostengünstiger Weise gefertigt werden.

Es ist gemäß einer offenbarten Ausführungsform des nicht erfindungsgemäßen Verfahrens denkbar, dass in Schritt e (Anordnen der Stößelführung und des Ventilstößels jeweils bezogen auf die Hubrichtung zwischen der ersten Ventilscheibe und der zweiten Ventilscheibe, so dass die erste Ventilscheibe und die zweite Ventilscheibe, bezogen auf die Hubrichtung an gegenüberliegenden äußeren Stirnflächen der Stößelführung angeordnet werden, so dass die erste Ventilscheibe und die zweite Ventilscheibe jeweils mit einer äußeren Stirnfläche in Anlage sind) ein Rückstellelement derart in der Stößelführung angeordnet wird, dass es als das Anordnungsmittel in Schritt f (Abdichten des ersten Ventilsitzes durch das freie Ende der beiden freien Enden mittels eines den Ventilstößel kraftbeaufschlagenden Anordnungsmittels) den Ventilstößel kraftbeaufschlagt und dadurch das freie Ende des Ventilstößels den ersten Ventilsitz abdichtet. Dadurch kann für den Fall, dass eine Entsprechung vorliegt, die Ventileinheit montiert verbleiben und muss nicht demontiert werden, um ein Rückstellelement einzubauen, welches als Druckfeder ausgebildet sein kann. Dies reduziert die Anzahl an Prozessschritten und führt zu einem kostengünstigen Verfahren. Zudem kann das bereits eingebaute Rückstellelement in Schritt f als Anordnungsmittel dienen.

Gemäß einer weiteren Ausgestaltung des nicht erfindungsgemäßen Verfahrens nach der Offenbarung ist der Definitionshubweg ein Einzelwert oder ein Wertebereich. Ein Einzelwert führt dazu, dass keine Toleranzen zugelassen werden und somit identische Ventileinheiten herstellbar sind. Ein Wertebereich mit einer zuvor definierbaren Maßunter- und Maßobergrenze stellt einen Maßtoleranzbereich dar, welcher ein gewisses Maß an Toleranz zulässt, jedoch mit einer gewünschten Stellcharakteristik eines Aktuators korrespondieren kann.

Es ist auch eine Weiterbildung des offenbarten nicht erfindungsgemäßen Verfahrens denkbar, wonach in Schritt h (Feststellen, ob der ermittelte Hubweg einem Definitionshubweg und/oder einem vordefinierten hydraulischen Volumenstrom entspricht) auch dann eine Entsprechung vorliegt, falls der Hubweg um bis zu maximal +/- 20% vom Definitionshubweg abweicht. Es kann jedoch auch eine Abweichung von +/- 10% oder gar +/- 5% vom Definitionshubweg gewählt werden. Auch diese Ausgestaltung dient der Zulässigkeit einer zuvor definierten Maßtoleranz, je nach Genauigkeitsanforderung an die Ventileinheit.

Denkbar ist auch eine Ausgestaltung des offenbarten nicht erfindungsgemäßen Verfahrens, bei welcher, vorzugsweise zur Bildung einer ersten Ventileinheit, in Schritt c (Bereitstellen eines Ventilstößels mit zwei gegenüberliegenden, jeweils zu dem ersten Ventilsitz und dem zweiten Ventilsitz korrespondierenden freien Enden) ein unbestimmter Ventilstößel und/oder in Schritt d (Bereitstellen einer Stößelführung mit bezogen auf eine Hubrichtung des Ventilstößels definierten Abmessungen) eine unbestimmte Stößelführung bereitgestellt wird. Hierdurch wird vor Montage keine nähere Auswahl eines zu verbauenden Bauteils getroffen. Es muss vor Montage auch keine sehr genaue Maßkontrolle erfolgen, was Herstellungskosten erheblich senkt. Der Ventilstößel und/oder die Stößelführung können daher ohne vorherige exakte Bestimmung bereitgestellt werden. Offenbart wird auch eine Ventileinheit für ein Ventil, mit einer Stößelführung, einer ersten Ventilscheibe, die einen ersten Ventilsitz aufweist und mit einer ersten äußeren Stirnfläche der Stößelführung in Anlage ist, einer zweiten Ventilscheibe, die einen zweiten Ventilsitz aufweist und mit einer der ersten Stirnfläche gegenüberliegenden zweiten äußeren Stirnfläche der Stößelführung in Anlage ist, und einem Ventilstößel, der in der Stößelführung in einer Hubrichtung zwischen einer ersten Endposition und einer zweiten Endposition beweglich angeordnet ist und in der ersten Endposition den ersten Ventilsitz und in der zweiten Endposition den zweiten Ventilsitz abdichtet. Die Stößelführung ist aus einer Vielzahl von Stößelführungen entsprechend einer bestimmten Kombination aus einer ersten Ventilscheibe, einer zweiten Ventilscheibe und einem Ventilstößel ausgewählt und/oder der Ventilstößel ist aus einer Vielzahl von Ventilstößeln entsprechend einer bestimmten Kombination aus einer ersten Ventilscheibe, einer zweiten Ventilscheibe und einer Stößelführung ausgewählt.

Die "bestimmte Kombination" ist das Ergebnis des in Anspruch 1 vorgeschlagenen Verfahrens gemäß einem "messenden und auswählenden"-Prinzip oder des zweiten vorgeschlagenen nicht erfindungsgemäßen Verfahrens gemäß einem "Versuch und Irrtum"-Prinzip. Während ersteres Verfahren einem Stößel durch Messen eine bestimmte Stößelführung zuordnet, sucht das zweite Verfahren nach einer kriterienerfüllenden Kombination aus Stößel und Stößelführung. Die dadurch hergestellte Ventileinheit zeichnet sich durch eine kostengünstige Konstruktion aus, da größere Toleranzbereiche der einzelnen Bauteile zulässig sein können.

Weiterbildungsgemäß ist die Stößelführung als ein Stanzbauteil, als ein Kaltumformteil oder als ein Metallpulverspritzugussteil ausgebildet ist. Metallpulverspritzuguss ist auch als metal powder injection molding (MIM) bezeichnet. Diese Herstellungsvarianten sind in der Lage Bauteile sehr kostengünstig herzustellen. Bislang scheiterte die Verwendung mittels dieser Verfahren hergestellten Bauteile für Ventileinheiten an der verhältnismäßig großen Schwankung von Abmessungen bzw. der großen Maßtoleranz. Die vorliegende Erfindung macht damit hergestellte Bauteile einsetzbar für hochpräzise Ventileinheiten.

Die Ventileinheit kann zusätzlich oder alternativ dadurch gekennzeichnet sein, dass die Stößelführung als ein Hohlzylinder ausgebildet ist. Es ist zudem eine Ventileinheit nach der Offenbarung denkbar, bei welcher die Stößelführung als ein Hohlzylinder ausgebildet ist. Dadurch kann die Stößelführung eine einfache Geometrie aufweisen und in kostengünstiger Weise hergestellt werden. Zudem kann ein Innenraum des Hohlzylinders ein Rückstellelement aufnehmen, welches als Druckfeder ausgebildet sein kann.

Die Ventileinheit kann zusätzlich oder alternativ dadurch gekennzeichnet sein, dass die erste Ventilscheibe, die zweite Ventilscheibe und/oder der Ventilstößel jeweils als ein Stanzbauteil, als ein Kaltumformteil oder als ein Spanteil ausgebildet sind. Gemäß einer weiteren Ausgestaltung der Ventileinheit nach der Offenbarung kann die erste Ventilscheibe, die zweite Ventilscheibe und/oder der Ventilstößel jeweils als ein Stanzbauteil, als ein Kaltumformteil oder als ein Spanteil ausgebildet sein. Bislang scheiterte die Verwendung mittels dieser Verfahren hergestellten Bauteile für Ventileinheiten an der verhältnismäßig großen Schwankung von Abmessungen bzw. der großen Maßtoleranz. Die vorliegende Erfindung macht damit hergestellte Bauteile einsetzbar für hochpräzise Ventileinheiten.

Die Ventileinheit kann zusätzlich oder alternativ dadurch gekennzeichnet sein, dass der Ventilstößel als ein zylinderförmiger Stab ausgebildet ist, der sich in der Hubrichtung erstreckt und ein erstes freies Ende zum Abdichten des ersten Ventilsitzes und ein zweites freies Ende zum Abdichten des zweiten Ventilsitzes aufweist. Es ist auch denkbar, dass der Ventilstößel als ein zylinderförmiger Stab ausgebildet ist, der sich in der Hubrichtung erstreckt und ein erstes freies Ende zum Abdichten des ersten Ventilsitzes und ein zweites freies Ende zum Abdichten des zweiten Ventilsitzes aufweist. Der Stößel kann somit, bei entsprechend gewählter Stößelführung, wahlweise den ersten oder den zweiten Ventilsitz abdichten.

Die Ventileinheit kann zusätzlich oder alternativ durch ein Rückstellelement gekennzeichnet sein, welches den Ventilstößel in die erste Endposition vorspannt. Die Ventileinheit nach der Offenbarung kann ein Rückstellelement umfassen, welches den Ventilstößel in die erste Endposition vorspannt. Das Rückstellelement kann beispielsweise eine Druckfeder sein.

Die Ventileinheit kann zusätzlich oder alternativ dadurch gekennzeichnet sein, dass die Stößelführung und der Ventilstößel jeweils einen Führungsvorsprung aufweisen und das Rückstellelement zwischen den beiden Führungsvorsprüngen angeordnet ist und sich an den beiden Führungsvorsprüngen abstützt. Weiterbildungsgemäß können die Stößelführung und der Ventilstößel zusätzlich oder alternativ jeweils einen Führungsvorsprung aufweisen, das Rückstellelement zwischen den beiden Führungsvorsprüngen angeordnet sein und sich an den beiden Führungsvorsprüngen abstützen. Dadurch kann eine kompakte Ventileinheit realisiert werden, welche ein unmittelbares Einwirken des Rückstellelements auf die Stößelführung und den Ventilstößel ermöglicht.

Die Ventileinheit kann zusätzlich oder alternativ dadurch gekennzeichnet sein, dass die Führungsvorsprünge ringförmig ausgebildet sind und sich jeweils quer, insbesondere senkrecht, zu der Hubrichtung erstrecken. Die Führungsvorsprünge können nach einer weiteren Ausgestaltung ringförmig ausgebildet sein und sich jeweils quer, insbesondere senkrecht, zu der Hubrichtung erstrecken. Dadurch sind Anlage- und Abstützflächen für das Rückstellelement geschaffen. Sofern das Rückstellelement als Druckfeder ausgeführt ist, kann sich diese an den Führungsvorsprüngen bestmöglich abstützen und Kräfte einleiten.

Die Ventileinheit kann zusätzlich oder alternativ dadurch gekennzeichnet sein, dass der Führungsvorsprung der Stößelführung und der Führungsvorsprung des Ventilstößels in der Hubrichtung beabstandet zueinander angeordnet sind. Dieser Abstand kann beispielsweise in der ersten Endposition vorliegen und Raum für ein dazwischen angeordnetes oder anordenbares Rückstellelement schaffen, oder in beiden Endpositionen vorliegen.

Gemäß einer Weiterbildung der offenbarten Ventileinheit können zusätzlich oder alternativ der Führungsvorsprung der Stößelführung und der Führungsvorsprung des Ventilstößels in der Hubrichtung beabstandet zueinander angeordnet sein. Eine derartige Ausführung lässt einen Raum zwischen den Führungsvorsprüngen, um dort das Rückstellelement anzuordnen.

Die Ventileinheit kann zusätzlich oder alternativ dadurch gekennzeichnet sein, dass der Führungsvorsprung der Stößelführung bezogen auf die Hubrichtung des Ventilstößels in einem Endabschnitt der Stößelführung angeordnet ist. Bei der offenbarten Ventileinheit kann der Führungsvorsprung der Stößelführung bezogen auf die Hubrichtung des Ventilstößels in einem Endabschnitt der Stößelführung angeordnet sein. Eine derartige Anordnung schafft einen größtmöglichen Raum für das Rückstellelement oder einen größtmöglichen Federweg für eine Druckfeder. Als Endabschnitt soll das letzte Viertel einer Abmessung angesehen werden.

Die Ventileinheit kann zusätzlich oder alternativ dadurch gekennzeichnet sein, dass der Führungsvorsprung des Ventilstößels in einem der ersten Ventilscheibe zugewandten Endbereich des Ventilstößels angeordnet ist. Es ist auch denkbar, dass der Führungsvorsprung des Ventilstößels in einem der ersten Ventilscheibe zugewandten Endbereich des Ventilstößels angeordnet ist. Auch eine derartige Anordnung schafft einen größtmöglichen Raum für das Rückstellelement oder einen größtmöglichen Federweg für eine Druckfeder. Als Endabschnitt soll ebenfalls das letzte Viertel einer Abmessung angesehen werden. Zudem kann sich der Ventilstößel über seinen Führungsvorsprung an der Stößelführung abstützen und eine führende Funktion übernehmen.

Die Ventileinheit kann zusätzlich oder alternativ dadurch gekennzeichnet sein, dass der Führungsvorsprung der Stößelführung in einem der zweiten Ventilscheibe zugewandten Endbereich der Stößelführung angeordnet ist. Der Führungsvorsprung der Stößelführung kann bei einer offenbarten Weiterbildung in einem der zweiten Ventilscheibe zugewandten Endbereich der Stö-βelführung angeordnet sein. Bei Anordnung einer Druckfeder kann diese den Stößel in die erste Endposition vorspannen.

Die Ventileinheit kann zusätzlich oder alternativ dadurch gekennzeichnet sein, dass sich der Ventilstößel in zumindest einer den zweiten Ventilsitz abdichtenden Stellung durch den Führungsvorsprung der Stößelführung erstreckt. Es ist auch denkbar, dass sich der Ventilstößel in zumindest einer den zweiten Ventilsitz abdichtenden Stellung durch den Führungsvorsprung der Stößelführung erstreckt. Dadurch kann sich der Ventilstößel über den Führungsvorsprung der Stößelführung abstützen, welcher eine führende Funktion übernehmen kann.

Die Ventileinheit kann zusätzlich oder alternativ dadurch gekennzeichnet sein, dass die Ventileinheit nach dem erfindungsgemäßen Verfahren oder dem zweiten offenbarten nicht erfindungsgemäßen Verfahren gebildet ist.

Ein Ventil mit einem Ventilgehäuse kann zusätzlich oder alternativ gekennzeichnet sein durch eine Ventileinheit nach einem der entsprechenden oberen Absätze, die in einer Ausnehmung eines Ventilgehäuses angeordnet ist, so dass sich eine Hubrichtung des Ventilstößels parallel zu einer Tiefenrichtung der Ausnehmung erstreckt. Es wird gemäß der Offenbarung zudem ein Ventil mit einem Ventilgehäuse vorgeschlagen, welches eine Ventileinheit nach einem der entsprechenden oberen Absätze umfasst, die in einer Ausnehmung eines Ventilgehäuses angeordnet ist, so dass sich eine Hubrichtung des Ventilstößels parallel zu einer Tiefenrichtung der Ausnehmung erstreckt.

Das Ventil kann zusätzlich oder alternativ gekennzeichnet sein durch eine Filtereinheit, die in der Ausnehmung des Ventilgehäuses bezogen auf die Tiefenrichtung benachbart zu der Ventileinheit angeordnet ist. Es ist zudem denkbar, dass das Ventil eine Filtereinheit umfasst, die in der Ausnehmung des Ventilgehäuses bezogen auf die Tiefenrichtung benachbart zu der Ventileinheit angeordnet ist.

Ein Elektromagnetventil mit einem elektromagnetischen Aktuator kann gekennzeichnet sein durch ein an dem elektromagnetischen Aktuator des Elektromagnetventils funktionsgemäß fixiertes Ventil nach einem der entsprechenden oberen Absätze.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine Längsschnittansicht durch ein offenbartes Elektromagnetventil;
- Fig. 1b: eine Detailansicht einer offenbarten Ventileinheit nach Fig. 1a;
- Fig. 2a: Bauteile einer offenbarten Ventileinheit während eines Prozessschritts des erfindungsgemäßen Verfahrens zur Bildung einer Ventileinheit;
- Fig. 2b: Bauteile einer offenbarten Ventileinheit während eines weiteren Prozessschritts des erfindungsgemäßen Verfahrens zur Bildung einer Ventileinheit;
- Fig. 2c: Bauteile einer offenbarten Ventileinheit während eines weiteren Prozessschritts des erfindungsgemäßen Verfahrens zur Bildung einer Ventileinheit;
- Fig. 2d: Bauteile einer offenbarten Ventileinheit während eines weiteren Prozessschritts des erfindungsgemäßen Verfahrens zur Bildung einer Ventileinheit und
- Fig. 3: Bauteile einer offenbarten Ventileinheit während eines Prozessschritts eines zweiten offenbarten nicht erfindungsgemäßen Verfahrens zur Bildung einer Ventileinheit

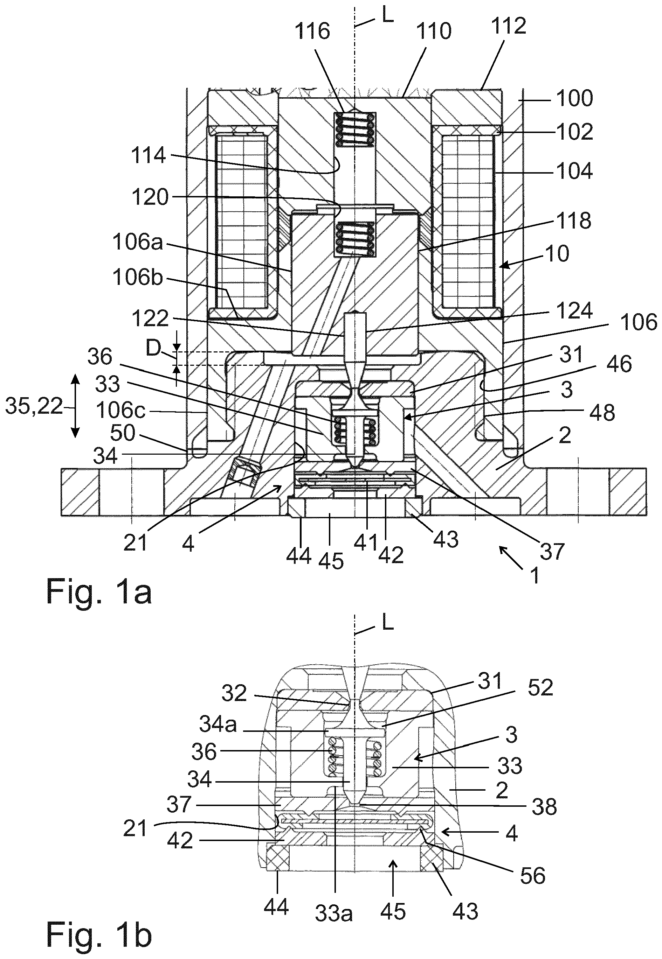

Figur 1a zeigt eine Längsschnittansicht durch ein erfindungsgemäßes Elektromagnetventil. Das Elektromagnetventil umfasst ein Ventil 1 und einen daran zu dessen Verstellung angeordneten elektromagnetischen Aktuator 10, welcher als monostabiler Linearmagnet in bekannter Weise ausgebildet ist. Das Elektromagnetventil ist in seiner Längsrichtung von einer Längsachse L durchgriffen.

Der elektromagnetische Aktuator 10 umfasst in einem Aktuatorgehäuse 100 einen Spulenträger 102, der eine wahlweise bestrombare Wicklung 104 trägt. Ein Polrohr 106 schließt den Aktuator 10 an seiner dem Ventil 1 zugewandten Endseite ab. Das Polrohr 106 weist drei Abschnitte 106a, 106b und 106c auf, wobei die Abschnitte 106a und 106b den Spulenträger 102 tragen und die Abschnitte 106b und 106c eine topfartige Ventilaufnahme 108 für das Ventil 1 ausbilden. An seiner dem Polrohr 106 gegenüberliegenden Endseite weist der Aktuator 10 einen Kern 110 und eine kernseitige Gehäuseplatte 112 zum Schließen des Magnetkreises auf. Der Kern 110 umfasst eine koaxial zur Längsachse L ausgebildete Kernbohrung 114 zur Aufnahme einer ersten Rückstellfeder 116 auf. Zudem ist ein mittels wahlweiser Bestromung der Wicklung 104 entlang der Längsachse L verstellbarer Anker 118 vorgesehen. Der Anker 118 umfasst an seiner dem Kern 110 zugewandten Seite eine erste Ankerbohrung 120 zur Aufnahme der ersten Rückstellfeder 116. Die erste Rückstellfeder 116 stützt sich somit einerseits am Grund der Kernbohrung 114 und anderenends am Grund der erste Ankerbohrung 120 ab. Die erste Rückstellfeder 116 ist als Druckfeder ausgebildet und spannt den Anker 118 in seine stromlos ausgefahrene Position vor. In Figur 1 ist die Wicklung im bestromten Zustand dargestellt und der Anker 118 entgegen der Federkraft der ersten Rückstellfeder 116 in seine eingefahrene Position verstellt. An seiner der ersten Ankerbohrung 120 gegenüberliegenden Seite weist der Anker 118 eine zweite Ankerbohrung 122 auf, in welche ein Ankerstößel 124 einragt und dort fixiert ist. Der Ankerstößel 124 ist mit dem Anker 118 verstellbar.

Das Ventil 1 umfasst ein Ventilgehäuse 2. Das Ventilgehäuse 2 weist an seiner Außenseite ein Befestigungsmittel auf, welches vorliegend als Außengewinde 46 ausgebildet ist. Das Außengewinde 46 greift in ein in der Ventilaufnahme 108 des Polrohrs 106 ausgebildetes Innengewinde 48 ein. Mittels einer Schweißnaht 50 ist das Ventil 1 mit dem Aktuator 10 dauerhaft verbunden. In dem Ventilgehäuse 2 ist in einer Ausnehmung 21 mit einer Tiefenrichtung 22 eine Ventileinheit 3 und eine Filtereinheit 4 angeordnet.

Die Ventileinheit 3 umfasst, wie in Figur 1b zu sehen, eine erste Ventilscheibe 31 mit einem ersten Ventilsitz 32 und eine Stößelführung 33, wobei die erste Ventilscheibe 31 mit einer ersten äußeren Stirnfläche 300b der Stößelführung 33 in Anlage ist. Bezüglich der Stößelführung 33 ist anderenends eine zweite Ventilscheibe 37 angeordnet, die einen zweiten Ventilsitz 38 aufweist und mit einer der ersten Stirnfläche 300b gegenüberliegenden zweiten äußeren Stirnfläche 300a der Stößelführung 33 in Anlage ist. Die Stößelführung 33 ist als Hohlzylinder ausgebildet und weist eine entlang der Längsachse L durchgehende Ausnehmung 52 auf. In der Ausnehmung 52 ist in Richtung der Längsachse L ein Ventilstößel 34 verschiebbar aufgenommen. Der Ventilstößel 34 ist in einer koaxial zur Längsachse L ausgerichteten Hubrichtung 35 zwischen einer ersten Endposition und einer zweiten Endposition beweglich angeordnet, wobei er in der ersten Endposition den ersten Ventilsitz 32 und in der zweiten Endposition den zweiten Ventilsitz 38 abdichtet. Der Ventilstößel 34 ist als ein zylinderförmiger Stab ausgebildet, der sich in der Hubrichtung 35 erstreckt und ein erstes freies Ende 39a zum Abdichten des ersten Ventilsitzes 32 und ein zweites freies Ende 39b zum Abdichten des zweiten Ventilsitzes 38 aufweist.

Die Stößelführung 33 und der Ventilstößel 34 weisen jeweils einen beabstandet zueinander angeordneten Führungsvorsprung 33a, 34a auf. In der Ausnehmung 52 ist ein sich an den Führungsvorsprüngen 33a, 34a abstützendes Rückstellelement 36 angeordnet, welches als Druckfeder ausgebildet ist und den Ventilstößel 34 in seine erste Endposition vorspannt. Der Ventilstößel 34 ist über seine dem Ankerstößel 124 zugewandte Stirnseite mit diesem schwimmend verbunden.

Die Führungsvorsprünge 33a, 34a sind ringförmig ausgebildet und erstrecken sich jeweils senkrecht zu der Hubrichtung 35. Der Führungsvorsprung 33a der Stößelführung 33 ist bezogen auf die Hubrichtung 35 des Ventilstößels 34 in einem Endabschnitt der Stößelführung 33 angeordnet. Der Führungsvorsprung 34a des Ventilstößels 34 ist in einem der ersten Ventilscheibe 31 zugewandten Endbereich des Ventilstößels 34 angeordnet. Der Führungsvorsprung 33a der Stößelführung 33 ist in einem der zweiten Ventilscheibe 37 zugewandten Endbereich der Stö-βelführung 33 angeordnet. Der Führungsvorsprung 34a ist umfangsseitig konvex gewölbt ausgebildet, um ein einfaches Einpassen bei der Montage zu gewährleisen und ein Verkanten beim Betrieb zu verhindern.

Figur 1b zeigt, dass sich der Ventilstößel 34 in zumindest einer den zweiten Ventilsitz 38 abdichtenden Stellung durch den Führungsvorsprung 33a der Stößelführung 33 erstreckt. Die Stö-βelführung 33 kann als ein Stanzbauteil, als ein Kaltumformteil oder als ein Metallpulverspritzugussteil ausgebildet sein. Die erste Ventilscheibe 31, die zweite Ventilscheibe 37 und/oder der Ventilstößel 34 können jeweils als ein Stanzbauteil, als ein Kaltumformteil oder als ein Spanteil ausgebildet sein.

Die Filtereinheit 4 umfasst ein Filtersieb 41, welches in Richtung der Längsachse L an einem Distanzring 54 der zweiten Ventilscheibe 37 anliegt, und einen Filterträger 42, welcher in Richtung der Längsachse L Über einen Distanzring 56 an dem Filtersieb 41 anliegt. Eine ebenfalls in der Ausnehmung 21 angeordnete und als Ring ausgeführte Dichtung 43 liegt außenseitig an dem Filterträger 42 an. Die Dichtung 43 weist eine Außenfläche 44 und einen zum Filtersieb 41 führenden Durchlass 45 auf.

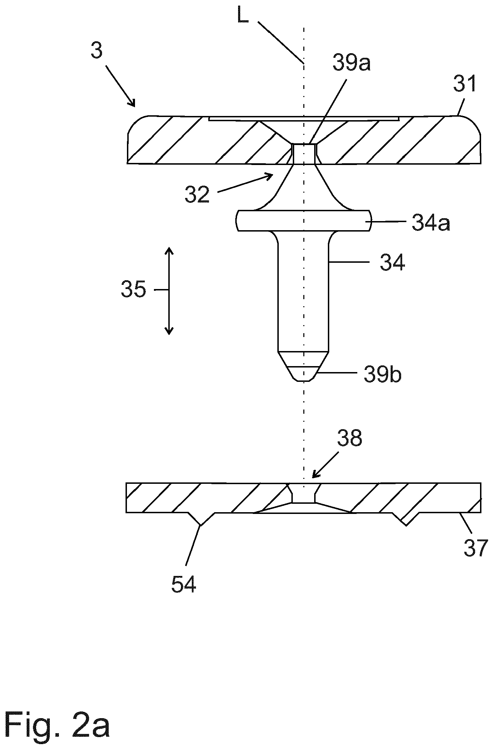

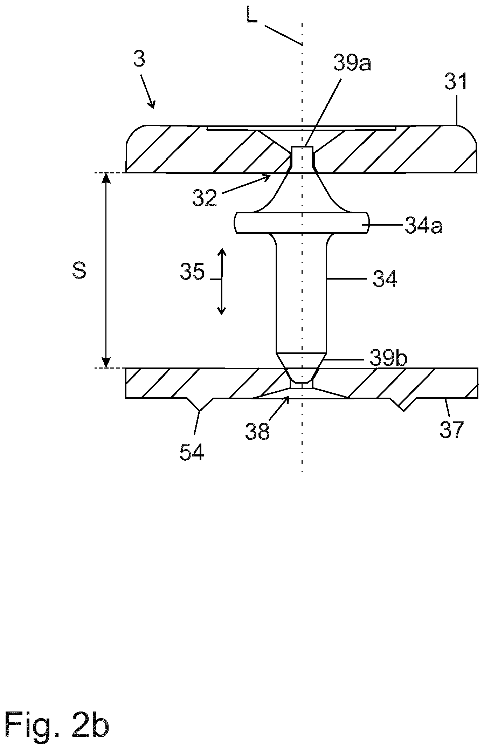

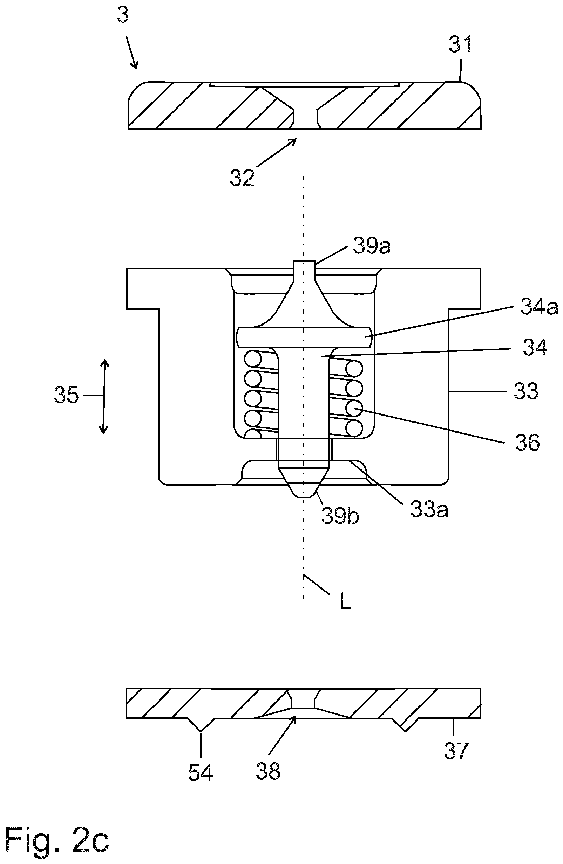

Ein erstes Verfahren zur Bildung einer Ventileinheit 3 soll im Folgenden beschrieben werden. Dieses Verfahren beruht auf einem "messenden und auswählenden"-Prinzip und umfasst zumindest die folgenden Schritte:
- Bereitstellen der ersten Ventilscheibe 31 mit dem ersten Ventilsitz 32;
- Bereitstellen der zweiten Ventilscheibe 37 mit dem zweiten Ventilsitz 38;
- Bereitstellen des Ventilstößels 34 mit zwei gegenüberliegenden, jeweils zu dem ersten Ventilsitz 32 und dem zweiten Ventilsitz 38 korrespondierenden freien Enden 39a, 39b, wie in Fig. 2a gezeigt;
- Bereitstellen einer Vielzahl von Stößelführungen 33 mit bezogen auf eine Hubrichtung 35 des Ventilstößels 34 verschiedenen Abmessungen;
- Anordnen des Ventilstößels 34 bezogen auf die Hubrichtung 35 zwischen der ersten Ventilscheibe 31 und der zweiten Ventilscheibe 37, so dass die beiden freien Enden 39a, 39b jeweils den ersten Ventilsitz 32 und den zweiten Ventilsitz 38 abdichten, wie in Fig. 2b abgebildet;
- Messen eines auf die Hubrichtung 35 bezogenen Scheibenabstands S zwischen den auf diese Weise angeordneten ersten und zweiten Ventilscheiben 31, 37;
- Auswählen einer Stößelführung 33 aus der Vielzahl von Stößelführungen 33, so dass eine auf die Hubrichtung 35 bezogene Abmessung der ausgewählten Stößelführung 33 gleich einer Summe aus dem gemessenen Scheibenabstand S und einem vorbestimmten Hub des Ventilstößels 34 ist, wie in Fig. 2c zu sehen.

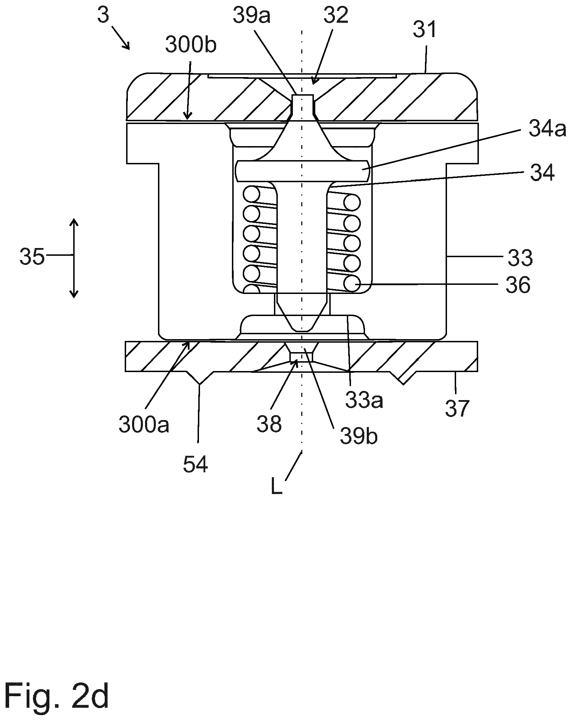

Mittels dieses ersten Verfahrens lässt sich eine hochpräzise Ventileinheit 3 herstellen, wie in Fig. 2d abgebildet.

Ein zweites, zum ersten Verfahren alternatives und nicht erfindungsgemäßes Verfahren zur Bildung einer Ventileinheit 3 soll im Folgenden ebenfalls beschrieben werden. Dieses Verfahren beruht auf einem "Versuch und Irrtum"-Prinzip und umfasst zumindest die folgenden Schritte:
- Bereitstellen der ersten Ventilscheibe 31 mit dem ersten Ventilsitz 32;
- Bereitstellen der zweiten Ventilscheibe 37 mit dem zweiten Ventilsitz 38;
- Bereitstellen eines Ventilstößels 34 mit zwei gegenüberliegenden, jeweils zu dem ersten Ventilsitz 32 und dem zweiten Ventilsitz 38 korrespondierenden freien Enden 39a, 39b;
- Bereitstellen einer Stößelführung 33 mit bezogen auf eine Hubrichtung 35 des Ventilstößels 34 definierten Abmessungen;
- Anordnen der Stößelführung 33 und des Ventilstößels 34 jeweils bezogen auf die Hubrichtung 35 zwischen der ersten Ventilscheibe 31 und der zweiten Ventilscheibe 37, so dass die erste Ventilscheibe 31 und die zweite Ventilscheibe 37, bezogen auf die Hubrichtung 35 an gegenüberliegenden äußeren Stirnflächen 300a, 300b der Stößelführung 33 angeordnet werden, so dass die erste Ventilscheibe 31 und die zweite Ventilscheibe 37 jeweils mit einer äußeren Stirnfläche 300a, 300b in Anlage sind;
- Abdichten des ersten Ventilsitzes 32 durch das freie Ende 39a der beiden freien Enden 39a, 39b mittels eines den Ventilstößel 34 kraftbeaufschlagenden Anordnungsmittels, wobei das Anordnungsmittel die Erdanziehung oder aber auch das Rückstellelement 36 sein kann;
- Messen eines auf die Hubrichtung 35 bezogenen Hubwegs H des Ventilstößels 34 zwischen einer den ersten Ventilsitz 32 abdichtenden Stellung und einer den zweiten Ventilsitz 38 abdichtenden Stellung;
- Feststellen, ob der ermittelte Hubweg H einem Definitionshubweg D und/oder einem vordefinierten hydraulischen Volumenstrom entspricht;
- Für den Fall, dass eine Entsprechung vorliegt: Beibehalten der vorliegenden Anordnung aus den Ventilscheiben 31, 37, der Stößelführung 33 und dem Ventilstößel 34;
- Für den Fall, dass keine Entsprechung vorliegt: Ersetzen der Stößelführung 33 durch eine andere Stößelführung und/oder Ersetzen des Ventilstößels 34 durch einen anderen Ventilstößel und Durchführen zumindest der Schritte g (Messen eines auf die Hubrichtung 35 bezogenen Hubwegs H des Ventilstößels 34 zwischen einer den ersten Ventilsitz 32 abdichtenden Stellung und einer den zweiten
   Ventilsitz 38 abdichtenden Stellung) und h (Feststellen, ob der ermittelte Hubweg H einem Definitionshubweg D und/oder einem vordefinierten hydraulischen Volumenstrom entspricht).

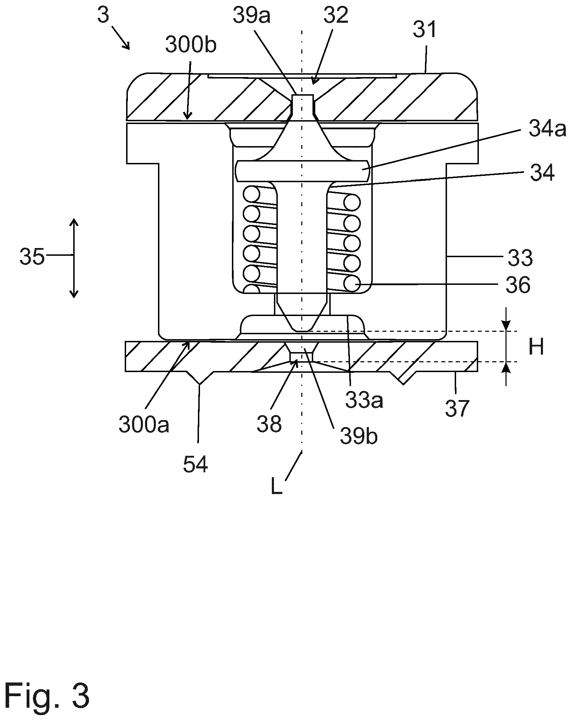

Auch mittels dieses zweiten Verfahrens lässt sich eine hochpräzise Ventileinheit 3 in einfacher Weise herstellen, wie in Fig. 3 abgebildet.

In Schritt e (Anordnen der Stößelführung 33 und des Ventilstößels 34 jeweils bezogen auf die Hubrichtung 35 zwischen der ersten Ventilscheibe 31 und der zweiten Ventilscheibe 37, so dass die erste Ventilscheibe 31 und die zweite Ventilscheibe 37, bezogen auf die Hubrichtung 35 an gegenüberliegenden äußeren Stirnflächen 300a,300b der Stößelführung 33 angeordnet werden, so dass die erste Ventilscheibe 31 und die zweite Ventilscheibe 37 jeweils mit einer äußeren Stirnfläche 300a, 300b in Anlage sind) kann das Rückstellelement 36 derart in der Stö-βelführung 33 angeordnet werden, dass es als das Anordnungsmittel in Schritt f (Abdichten des ersten Ventilsitzes 32 durch das freie Ende 39a der beiden freien Enden 39a, 39b mittels eines den Ventilstößel 34 kraftbeaufschlagenden Anordnungsmittels, wobei das Anordnungsmittel die Erdanziehung oder aber auch das Rückstellelement 36 sein kann) den Ventilstößel 34 kraftbeaufschlagt und dadurch das freie Ende 39a des Ventilstößels 34 den ersten Ventilsitz 32 abdichtet. Der Definitionshubweg D kann ein Einzelwert oder ein Wertebereich sein. In Schritt h (Feststellen, ob der ermittelte Hubweg H einem Definitionshubweg D und/oder einem vordefinierten hydraulischen Volumenstrom entspricht) kann auch dann eine Entsprechung vorliegen, falls der Hubweg H um bis zu maximal +/- 20% vom Definitionshubweg D abweicht. Vorzugsweise wird zur Bildung einer ersten Ventileinheit 3, in Schritt c (Bereitstellen eines Ventilstößels 34 mit zwei gegenüberliegenden, jeweils zu dem ersten Ventilsitz 32 und dem zweiten Ventilsitz 38 korrespondierenden freien Enden 39a, 39b) ein unbestimmter Ventilstößel 34 und/oder in Schritt d (Bereitstellen einer Stößelführung 33 mit bezogen auf eine Hubrichtung 35 des Ventilstößels 34 definierten Abmessungen) eine unbestimmte Stößelführung (33) bereitgestellt.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Um Wiederholungen zur Vermeidung sollen verfahrensgemäß offenbarte Merkmale auch als vorrichtungsgemäß offenbart gelten und beanspruchbar sein. Gleichsam sollen vorrichtungsgemäß offenbarte Merkmale als verfahrensgemäß offenbart gelten und beanspruchbar sein.

### Bezugszeichenliste

- 1: Ventil
- 2: Ventilgehäuse
- 3: Ventileinheit
- 4: Filtereinheit
- 10: elektromagnetischer Aktuator
- 21: Ausnehmung
- 22: Tiefenrichtung
- 31: erste Ventilscheibe
- 32: erster Ventilsitz
- 33: Stößelführung
- 33a: Führungsvorsprung
- 34: Ventilstößel
- 34a: Führungsvorsprung
- 35: Hubrichtung
- 36: Rückstellelement
- 37: zweite Ventilscheibe
- 38: zweiter Ventilsitz
- 39a: erstes freies Ende
- 39b: zweites freies Ende
- 41: Filtersieb
- 42: Filterträger
- 43: Dichtung
- 44: Außenfläche
- 45: Durchlass
- 46: Außengewinde
- 48: Innengewinde
- 50: Schweißnaht
- 52: Ausnehmung
- 54: Distanzring
- 56: Distanzring
- 100: Aktuatorgehäuse
- 102: Spulenträger
- 104: Wicklung
- 106: Polrohr
- 106a: Abschnitt
- 106b: Abschnitt
- 106c: Abschnitt
- 108: Ventilaufnahme
- 110: Kern
- 112: Gehäuseplatte
- 114: Kernbohrung
- 116: erste Rückstellfeder
- 118: Anker
- 120: erste Ankerbohrung
- 122: zweite Ankerbohrung
- 124: Ankerstößel
- 300a: zweite äußere Stirnfläche
- 300b: erste äußere Stirnfläche

- D: Definitionshubweg
- H: Hubweg
- L: Längsachse
- S: Scheibenabstand

## Patentansprüche

1. Verfahren zur Bildung einer Ventileinheit (3), umfassend die Schritte:
a) Bereitstellen einer ersten Ventilscheibe (31) mit einem ersten Ventilsitz (32);
b) Bereitstellen einer zweiten Ventilscheibe (37) mit einem zweiten Ventilsitz (38);
c) Bereitstellen eines Ventilstößels (34) mit zwei gegenüberliegenden, jeweils zu dem ersten Ventilsitz (32) und dem zweiten Ventilsitz (38) korrespondierenden freien Enden (39a, 39b);
d) Bereitstellen einer Vielzahl von Stößelführungen (33) mit bezogen auf eine Hubrichtung (35) des Ventilstößels (34) verschiedenen Abmessungen;
e) Anordnen des Ventilstößels (34) bezogen auf die Hubrichtung (35) zwischen der ersten Ventilscheibe (31) und der zweiten Ventilscheibe (37), so dass die beiden freien Enden (39a, 39b) jeweils den ersten Ventilsitz (32) und den zweiten Ventilsitz (38) abdichten;
f) Messen eines auf die Hubrichtung (35) bezogenen Scheibenabstands (S) zwischen den auf diese Weise angeordneten ersten und zweiten Ventilscheiben (31, 37);
g) Auswählen einer Stößelführung (33) aus der Vielzahl von Stößelführungen (33), so dass eine auf die Hubrichtung (35) bezogene Abmessung der ausgewählten Stößelführung (33) gleich einer Summe aus dem gemessenen Scheibenabstand (S) und einem vorbestimmten Hub des Ventilstößels (34) ist.

2. Verfahren nach Anspruch 1, **dadurch gekennzeichnet, dass** ein Rückstellelement (36) und der Ventilstößel (34) in der Stößelführung (33) angeordnet werden, so dass das Rückstellelement (36) zwischen einem Führungsvorsprung (34a) des Ventilstößels (34) und einem Führungsvorsprung (33a) der Stößelführung (33) angeordnet ist und sich an den beiden Führungsvorsprüngen (33a, 34a) abstützt.

3. Verfahren nach einem der vorhergehenden Ansprüche, **dadurch gekennzeichnet, dass** die erste Ventilscheibe (31) und die zweite Ventilscheibe (37), bezogen auf die Hubrichtung (35) an gegenüberliegenden äußeren Stirnflächen (300a, 300b) der Stößelführung (33) angeordnet werden, so dass die erste Ventilscheibe (31) und die zweite Ventilscheibe (37) jeweils mit einer äußeren Stirnfläche (300a, 300b) in Anlage sind.

## Claims

1. Method for forming a valve unit (3), comprising the steps of:
a) providing a first valve disc (31) having a first valve seat (32);
b) providing a second valve disc (37) having a second valve seat (38);
c) providing a valve plunger (34) having two oppositely situated free ends (39a, 39b) which respectively correspond to the first valve seat (32) and the second valve seat (38);
d) providing a multiplicity of plunger guides (33) having dimensions which differ with respect to a stroke direction (35) of the valve plunger (34);
e) arranging the valve plunger (34) between the first valve disc (31) and the second valve disc (37) with respect to the stroke direction (35) such that the two free ends (39a, 39b) respectively seal off the first valve seat (32) and the second valve seat (38);
f) measuring a disc spacing (S), with respect to the stroke direction (35), between the first and second valve discs (31, 37) arranged in this way;
g) selecting a plunger guide (33) from the multiplicity of plunger guides (33) such that a dimension, with respect to the stroke direction (35), of the selected plunger guide (33) is equal to a sum of the measured disc spacing (S) and a predetermined stroke of the valve plunger (34).

2. Method according to Claim 1, **characterized in that** a restoring element (36) and the valve plunger (34) are arranged in the plunger guide (33) such that the restoring element (36) is arranged between a guide projection (34a) of the valve plunger (34) and a guide projection (33a) of the plunger guide (33) and is supported against the two guide projections (33a, 34a) .

3. Method according to either of the preceding claims, **characterized in that** the first valve disc (31) and the second valve disc (37) are arranged, with respect to the stroke direction (35), on oppositely situated outer end faces (300a, 300b) of the plunger guide (33) such that the first valve disc (31) and the second valve disc (37) are respectively in abutment with an outer end face (300a, 300b).

## Revendications

1. Procédé de formation d'une unité de soupape (3), ledit procédé comprenant les étapes suivantes :
a) fournir un premier disque de soupape (31) pourvu d'un premier siège de soupape (32) ;
b) fournir un deuxième disque de soupape (37) pourvu d'un deuxième siège de soupape (38) ;
c) fournir un poussoir de soupape (34) pourvu de deux extrémités libres opposées (39a, 39b) correspondant respectivement au premier siège de soupape (32) et au deuxième siège de soupape (38) ;
d) fournir un grand nombre de guides de poussoir (33) ayant des dimensions différentes par rapport à une direction de course (35) du poussoir de soupape (34) ;
e) disposer le poussoir de soupape (34) entre le premier disque de soupape (31) et le deuxième disque de soupape (37) par rapport à la direction de course (35) de sorte que les deux extrémités libres (39a, 39b) étanchéifient respectivement le premier siège de soupape (32) et le deuxième siège de soupape (38) ;
f) mesurer un écartement (S) entre les premier et deuxième disques de soupape (31, 37) ainsi disposés par rapport à la direction de course (35) ;
g) sélectionner un guide de poussoir (33) parmi le grand nombre de guides de poussoir (33) de sorte qu'une dimension, liée à la direction de course (35), du guide de poussoir sélectionné (33) soit égale à la somme de l'écartement mesuré (S) des disques et d'une course prédéterminée du poussoir de soupape (34).

2. Procédé selon la revendication 1, **caractérisé en ce qu'**un élément de rappel (36) et le poussoir de soupape (34) sont disposés dans le guide de poussoir (33) de sorte que l'élément de rappel (36) soit disposé entre une saillie de guidage (34a) du poussoir de soupape (34) et une saillie de guidage (33a) du guide de poussoir (33) et prenne appui sur les deux saillies de guidage (33a, 34a).

3. Procédé selon l'une des revendications précédentes, **caractérisé en ce que** le premier disque de soupape (31) et le deuxième disque de soupape (37) sont disposés sur des surfaces frontales extérieures opposées (300a, 300b) du guide de poussoir (33) en relation vers la direction de course (35) de sorte que le premier disque de soupape (31) et le deuxième disque de soupape (37) soient chacun en appui sur une surface frontale extérieure (300a, 300b).
